# EUROPEAN PATENT SPECIFICATION

(11) **EP 4 019 844 B1**
(45) Date of publication and mention of the grant of the patent: **03.04.2024**
(21) Application number: 20217235.9
(22) Date of filing: 24.12.2020
(51) Int. Cl.: F23R 3/34, F02C 7/228, F02C 9/34

(54) **GAS TURBINE ENGINE WITH FIRST AND SECOND STAGE FUEL CONTROL AND METHOD OF CONTROLLING A GAS TURBINE ENGINE**
GASTURBINENMOTOR MIT ERSTER UND ZWEITER KRAFTSTOFFSTUFENSTEUERUNG UND VERFAHREN ZUR STEUERUNG EINES GASTURBINENMOTORS
MOTEUR À TURBINE À GAZ AVEC COMMANDE DE CARBURANT DU PREMIER ET DU SECOND ÉTAGE ET PROCÉDÉ DE COMMANDE D'UN MOTEUR À TURBINE À GAZ

(43) Date of publication of application: 29.06.2022
(73) Proprietor: Ansaldo Energia Switzerland AG, 5400 Baden (CH)
(72) Inventor: APPEL, Christoph, 5400 BADEN (CH); JAKOBY, Ralf, 5400 BADEN (CH); RINN, Joerg, 5400 BADEN (CH); SINGLA, Ghislain, 5400 BADEN (CH); SMITH, Richard, 5400 BADEN (CH); STUDERUS, Adrien, 5400 BADEN (CH); WESNIUK, Adam, 5400 BADEN (CH)
(74) Representative: Studio Torta S.p.A.

(56) References cited:
- EP-A1- 0 974 789
- EP-A1- 2 857 658
- DE-A1-102006 059 532
- GB-A- 2 307 981
- US-A1- 2020 393 131

## Description

### TECHNICAL FIELD

The present invention relates to a gas turbine engine with first and second stage fuel control and to a method of controlling a gas turbine engine.

### BACKGROUND

As it is known, control of pollutant emissions is an objective of primary importance in design of any type of thermal machine and, in particular, of gas turbines for power plants. In fact, awareness of environmental risks drives towards regulations that set increasingly strict requirements. On the other hand, the organization of modern power market and the continuously variable demand do not allow to operate plants at constant load conditions. Instead, the need to meet demand fluctuations, including sudden rise or drop, and to contribute to control of grid frequency require quite flexible operation. The reduction of pollutant emissions, however, is made critical by such a flexible operation.

One of the problems to be addressed, for example, relates to operation at very low partial load. A switch-off sequence of burners is implemented to arrive at a part load pattern of burners which remain active in low load range. However, reducing the number of active burners in a combustor assembly may not be sufficient to meet both market and low emission requirements and active burners often need be used in the lowest part of their power range. CO emissions are not normally an issue at full load, but low temperature and pressure at low load may prevent the complete oxidation of the carbon and favour the formation of carbon monoxide, thus limiting the capabilities of gas turbine engines to operate with very low power output. A method to (partially) overcome this limitation is the de-activation of individual burners at low engine loads. Thus, the remaining active burners can operate at higher temperature levels, which keeps the amount of carbon monoxide formation low.

There is however a general desire to further reduce the minimum power delivered by gas turbine engines, in order to meet more and more flexible market demand and to comply with strict law requirements on emission and grid frequency control.

DE 10 2006 059532 A1 discloses a gas turbine engine, comprising a first-stage combustor with a plurality of first burner assemblies and a second-stage combustor with a plurality of second burner assemblies, downstream of the first-stage combustor. A fuel supply system supplies a respective first fuel flowrate to each first burner assembly and a respective second fuel flowrate to each second burner assembly. A controller controls the first fuel flowrate and the second fuel flowrate and selectively activates and deactivates the second burner assemblies.

Other examples of known gas turbine engines are disclosed in EP 2 857 658 A1, US 2020/393131 A1, EP 0 974 789 A1 and GB 2 307 981 A.

### SUMMARY OF THE INVENTION

It is an aim of the present invention to provide a gas turbine engine and a method of controlling a gas turbine engine, which allow to overcome or at least attenuate the limitations described.

According to the present invention, there is provided a gas turbine engine, comprising:
a first-stage combustor with a plurality of first burner assemblies;
a second-stage combustor with a plurality of second burner assemblies, downstream of the first-stage combustor;
a fuel supply system, configured to supply a respective first fuel flowrate to each first burner assembly and a respective second fuel flowrate to each second burner assembly;
a controller, configured to control the first fuel flowrate and the second fuel flowrate;
wherein the controller is further configured to selectively activate and deactivate the second burner assemblies;
characterized in that the controller (10) is further configured to supply a first value of the first fuel flowrate to a first group of the first burner assemblies and a second value of the first fuel flowrate to a second group of the first burner assemblies in partial load operating condition while at least a first group of the second burner assemblies are inactive, the first value of the first fuel flowrate being lower than the second value of the first fuel flowrate or being zero flowrate.

To a certain extent, load reduction may be obtained by deactivation of the second burner assemblies. Control of fuel flowrate to the first group of first burner assemblies and possibly switch-off allow to further reduce power delivered by the gas turbine engine. Extremely low loads may be thus achieved without affecting compliance to emission and frequency control requirements.

According to an aspect of the invention, the controller is further configured to supply the first group of the first burner assemblies with the partial value of the first fuel flowrate while a second group of the second burner assemblies are active.

Active second burner assemblies may be operated with full fuel supply, thus keeping hot gas temperature high. No risk of increasing noxious emission derive from the second burner assemblies remaining active during steady operation. Deloading procedure down to very low partial load may benefit from combustion conditions of the active second burner assemblies.

According to an aspect of the invention, the controller is further configured to supply the first group of the first burner assemblies with the partial value of the first fuel flowrate while all the second burner assemblies are inactive.

The load of the gas turbine engine may be thus driven as low as required by the circumstances.

According to an aspect of the invention, a composition of the first group of the first burner assemblies varies from a first partial load operating condition to a second partial load operating condition.

Different patterns of first burner assemblies may be deloaded or possibly deactivated to implement flexible control strategies, also in view of making ageing and lifetime of components uniform and prevent early failure of mechanical integrity.

According to an aspect of the invention, each of the first burner assemblies comprise a respective main burner and a respective pilot burner and the fuel supply system is configured to supply the main burner with the respective first fuel flowrate and the pilot burner with a pilot fuel flowrate.

According to an aspect of the invention, the fuel supply system comprises a first-stage supply system, coupled to the first-stage combustor and controlled by the controller to supply the first fuel flowrates to the first burner assemblies, and a second-stage supply system, coupled to the second-stage combustor and controlled by the controller to supply the second fuel flowrates to the second combustor assemblies.

According to an aspect of the invention, the first-stage supply system comprises a main supply line, coupled to the main burners of the first group of first burner assemblies, and a plurality of first main valves, independently controlled by the controller and each having an inlet coupled to the first main supply line and an outlet coupled to a respective one of the main burners of the first group of first burner assemblies.

Individual and independent control of the first main valves allows flexible selection of first main fuel valves. For example, the main burners of the first group of first burner assemblies may be sequentially deactivated or receive respective different partial values of the first fuel flowrate. In addition, the number of first burner assemblies in the first group and the composition, i.e. the specific first burner assemblies actually selected, of the first group may vary according to preferences or current requirements.

According to an aspect of the invention, the first-stage supply system comprises a main supply line, coupled to the main burners of the first group of first burner assemblies, a first main valve, controlled by the controller and having an inlet coupled to the first main supply line and an outlet coupled to the main burners of the first group of first burner assemblies, and a second main valve, controlled by the controller and having an inlet coupled to the first main supply line and an outlet coupled to the main burners of a second group of first burner assemblies, the second group of first burner assemblies being complementary to the first group of first burner assemblies.

The structure of the first-stage supply system with a first main valve and a second main valve for the first group and the second group of first burner assemblies, respectively, is simple yet effective in achieving selective reduction of fuel supply in the first-stage combustor. Simple structure involves relatively low cost for both manufacturing and maintenance and also risk of sudden failure is low.

According to an aspect of the invention, the first-stage supply system comprises a pilot supply line configured to supply a pilot fuel flowrate to the pilot burners of the first burner assemblies and a pilot valve, controlled by the controller and having an inlet coupled to the pilot supply line and an outlet coupled to the pilot burners of first burner assemblies; and wherein the controller is configured to maintain the pilot fuel flowrate while the partial value of the first fuel flowrate is supplied to the first group of the first burner assemblies.

The first burner assemblies of the first group are not completely switched off even when the fuel supply to the main burners is removed. Maintaining the pilot burners active independently of the load condition helps keeping appropriate temperature levels and improves responsiveness of the gas turbine engine for the purpose of frequency response control.

According to an aspect of the invention, the controller is further configured to simultaneously or sequentially
switch off the main burners of the first group of first burner assemblies in the partial load operating condition.

Switching off the main burners allows to reduce the power delivered by the gas turbine engine without incurring the risk of increasing pollutant emissions. Sequential switch-off leads to gradual deloading of the gas turbine engine in safe and clean conditions.

According to an aspect of the invention, the first-stage combustor comprises a first annular combustion chamber and the second-stage combustor comprises a second annular combustion chamber and wherein the first burner assemblies and the second burner assemblies are circumferentially arranged about an axis.

According to an aspect of the invention, there is provided a method of controlling a gas turbine engine comprising a first-stage combustor with a plurality of first burner assemblies and a second-stage combustor with a plurality of second burner assemblies, downstream of the first-stage combustor;
the method comprising:
supplying a respective first fuel flowrate to each first burner assembly and a respective second fuel flowrate to each second burner assembly; and
selectively activating and deactivating the second burner assemblies;
characterized by supplying a partial value of the first fuel flowrate to at least a first group of the first burner assemblies in a partial load operating condition while at least a first group of the second burner assemblies are inactive, the partial value of the first fuel flowrate being lower than a full-load value or zero flowrate.

### BRIEF DESCRIPTION OF THE DRAWINGS

The present invention will now be described with reference to the accompanying drawings, which show some nonlimitative embodiment thereof, in which:
- figure 1 is a simplified block diagram of a gas turbine engine;
- figure 2 is a schematic view of a first combustor assembly and a portion of a first fuel supply system incorporated in the gas turbine engine of figure 1 and made in accordance with one embodiment of the present invention;
- figure 3 is a schematic view of a second combustor assembly and a portion of a second fuel supply system incorporated in the gas turbine engine of figure 1 and made in accordance with one embodiment of the present invention;
- figures 4-11 schematically show the first combustor assembly and the second combustor assembly in different operating conditions;
- figure 12 is a schematic view of a first combustor assembly and a portion of a first fuel supply system incorporated in the gas turbine engine of figure 1 and made in accordance with another embodiment of the present invention;
- figure 13 is a schematic view of a first combustor assembly and a portion of a first fuel supply system incorporated in the gas turbine engine of figure 1 and made in accordance with a further embodiment of the present invention; and
- figure 14 is a schematic view of a first combustor assembly and a portion of a first fuel supply system incorporated in the gas turbine engine of figure 1 and made in accordance with still another embodiment of the present invention.

### DETAILED DESCRIPTION OF EXEMPLARY EMBODIMENTS

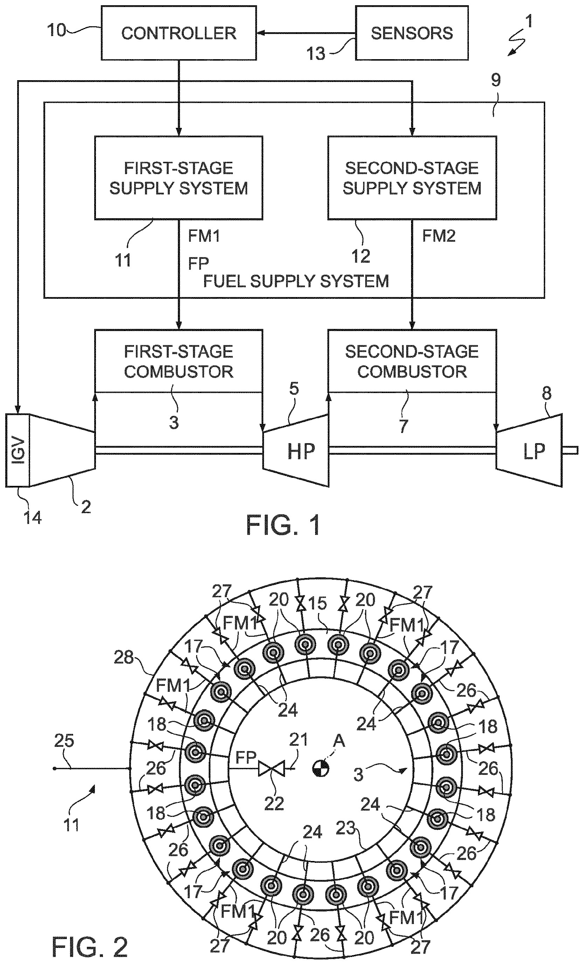

Figure 1 shows a simplified view of a gas turbine engine, designated as whole with numeral 1. The gas turbine engine 1 comprises a compressor 2, a first-stage combustor 3, optionally a high-pressure turbine 5, a second-stage combustor 7 (also referred to as sequential combustor) and a low-pressure turbine 8.

The gas turbine engine further comprises a fuel supply system 9 and a controller 10.

The fuel supply system 9 that delivers fuel flowrates for operation of the first-stage combustor 3 and the second-stage combustor 7 and comprises a first-stage supply system 11, coupled to the first-stage combustor 3, and a second-stage supply system 12, coupled to the second-stage combustor 7. Both the a first-stage supply system 11 and the second-stage supply system 12 are controlled by the controller 10.

The controller 10 receives state signals from system sensors 13 and operates the gas turbine through actuators to provide a controlled power output. The actuators include orientable inlet guide vanes 14 of the compressor 2 and valves of the first-stage supply system 11 and second-stage supply system 12 as illustrated in detail in what follows.

A flow of compressed air supplied by the compressor 2 is added with fuel and the air/fuel mixture thus obtained is burnt in the first-stage combustor 3. The exhaust gas of the first-stage combustor 3 is expanded in the high-pressure turbine 5, then, after possibly adding a flow of diluting air, additional fuel is mixed and burnt in the second-stage combustor 7. The exhaust gas is finally expanded in the low-pressure turbine 8 and discharged either to the outside or e.g. to a heat recovery steam generator. The amount of fuel delivered by the first-stage supply system 11 and the second-stage supply system 12 is controlled by the controller 10.

Figure 2 schematically shows the first-stage combustor 3 and part of the first-stage supply system 11.

The first-stage combustor 3 comprises an annular combustion chamber 15, extending about a longitudinal axis A of the gas turbine engine 1, and a plurality of first burner assemblies 17, circumferentially distributed around the longitudinal axis A. Each first burner assembly 17 comprises a respective pilot burner 18 and a respective main burner 20.

The first-stage supply system 11 is configured to supply a pilot fuel flowrate FP to each pilot burner 18 and to supply respective first main fuel flowrates FM1 to the main burners 20 with.

A pilot branch of the first-stage supply system 11 comprises a pilot supply line 21, a pilot valve 22 and a pilot plenum 23, in the form of a distributor ring. The pilot valve 22, e.g. a control valve or a shut-off valve, is controlled by the controller 10 and has an inlet coupled to the pilot supply line 21 and an outlet coupled to each one of the pilot burners 18 of the first burner assemblies 17 through the pilot plenum 23 and ducts 24.

A main branch of the first-stage supply system 11 comprises a main supply line 25, main valves 27 and a main plenum 28, again in the form of a distributor ring. The main valves 27, e.g. control valves, are individually and independently controlled by the controller 10 in one embodiment and have inlets coupled to the main plenum 28, which is in turn coupled to the main supply line 25 through ducts 26 and outlets coupled each to a respective one of the main burners 20 of the first burner assemblies 17. The controller 10 is thus in condition to individually control the first main fuel flowrate FM1 supplied to each one of the main burners 20.

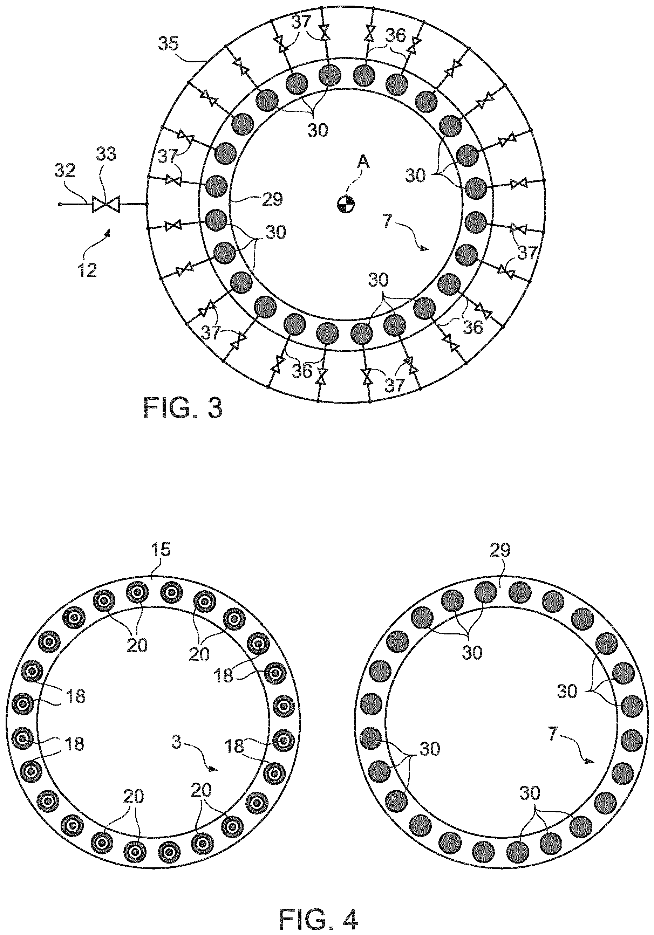

With reference to figure 3, schematically shows the second-stage supply system 12 and the second-stage combustor 7, which comprises an annular combustion chamber 29, extending about the longitudinal axis A, and a plurality of second burner assemblies 30 circumferentially arranged about the machine axis A. The second-stage supply system 12 comprises a second-stage supply line 32, a second-stage fuel valve 33 and a fuel plenum 35. The second-stage fuel valve 33 has an inlet coupled to the second-stage supply line 32 and an outlet coupled to each of the second burner assemblies 30 through the fuel plenum 35 and ducts 36. A respective second main fuel flowrate FM2 controlled by the controller 10 may be thus supplied to each second burner assembly 30. Shut-off valves 37 are arranged along the supply ducts 36, a respective one for each second burner assembly 30. Thus, the shut-off valves 37 are arranged between the second-stage fuel valve 33 and fuel inlets of the respective second burner assemblies 30. The shut-off valves 37 are independently controlled by the controller 10, so that the controller 10 may activate and deactivate each second burner assembly 30 independently of the other second burner assemblies 30.

The controller 10 is configured to control at least the first main fuel flowrates FM1 and second main fuel flowrate FM2 respectively supplied to the main burners 20 of the first burner assemblies 17 and to the second burner assemblies 30. Specifically, the controller operates the first-stage supply system 11 and the second-stage supply system 12 to supply a full-load value of the first main fuel flowrates FM1 to each main burner 20 in a full-load operating condition, when all the second burner assemblies are active and receive the respective second main fuel flowrate FM2 (see figure 4).

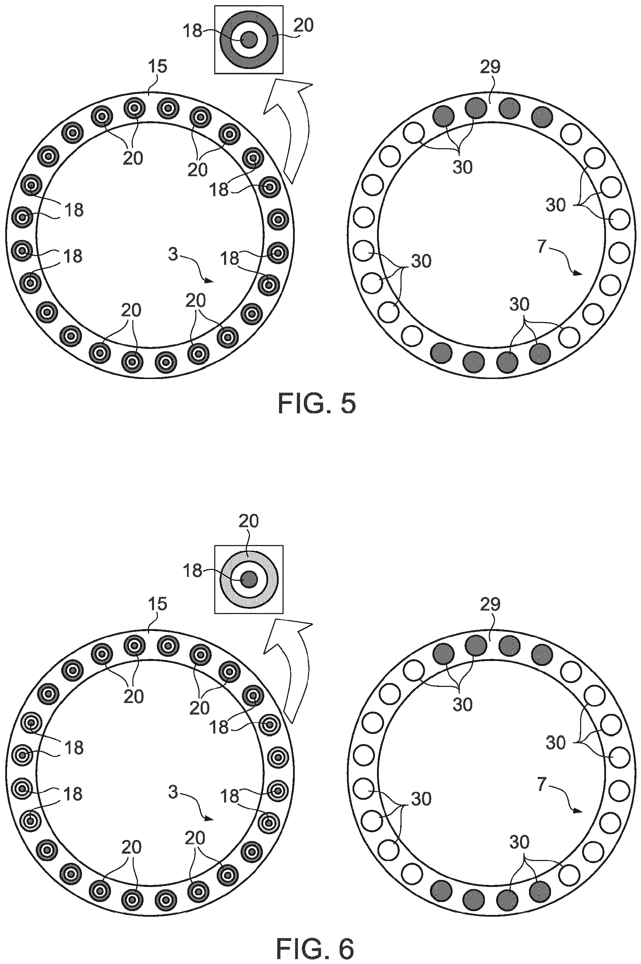

When load reduction is required e.g. because of overnight reduction of load request from the grid, the controller 10 sequentially deactivates a first group of the second burner assemblies 30 until only a second group of a programmed number of a second burner assemblies 30 remain active, e.g. eight, and a first part-load operating condition and a load threshold are reached (figure 5; fully active burners, both of the first-stage combustor 3 and of the second-stage combustor 7, are represented in dark grey and inactive burners are in white, see the enlarged detail). In this step, the controller 10 still sends the first main fuel flowrates FM1 to all main burners 20.

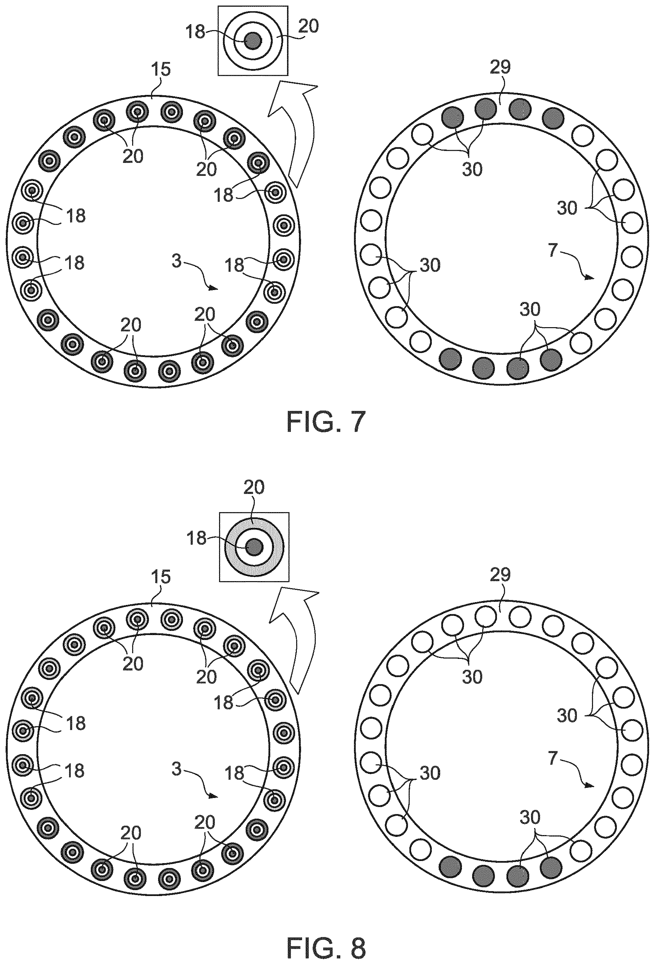

If further reduction of load below the load threshold is requested (figure 6), in a second partial load operating condition the controller 10 supplies a partial first value of the first main fuel flowrate FM1 to a first group of the first burner assemblies 17 (light grey in figure 6, see the enlarged detail, see the enlarged detail), while the first group of second burner assemblies 30 are inactive and the second group of second burner assemblies 30 are active. In other words, fuel supply is reduced for the first burner assemblies 17 of the first group, while the first burner assemblies 17 of a second complementary group receive a second value of the first main fuel flowrate FM1 which may correspond to full-load value or part-load. In any case, the first value of the first main fuel flowrate FM1 supplied to a first group of the first burner assemblies 17 is lower than the second value of the first main fuel flowrate FM1 supplied to the second group of the first burner assemblies 17. Specifically, in the embodiment described fuel supply is reduced for the main burners 20 of first group of the first burner assemblies 17, whereas fuel supply is unchanged for all the pilot burners 18. The controller 10 starts reduction of the first main fuel flowrates FM1 for the first group of the first burner assemblies 17 when all the second burner assemblies 30 of the first group have been deactivated. The first main fuel flowrates FM1 for the first group of the first burner assemblies 17 can be reduced to zero, i.e. the main burners 20 of the first group of first burner assemblies 17 are switched off (figure 7, see the enlarged detail).

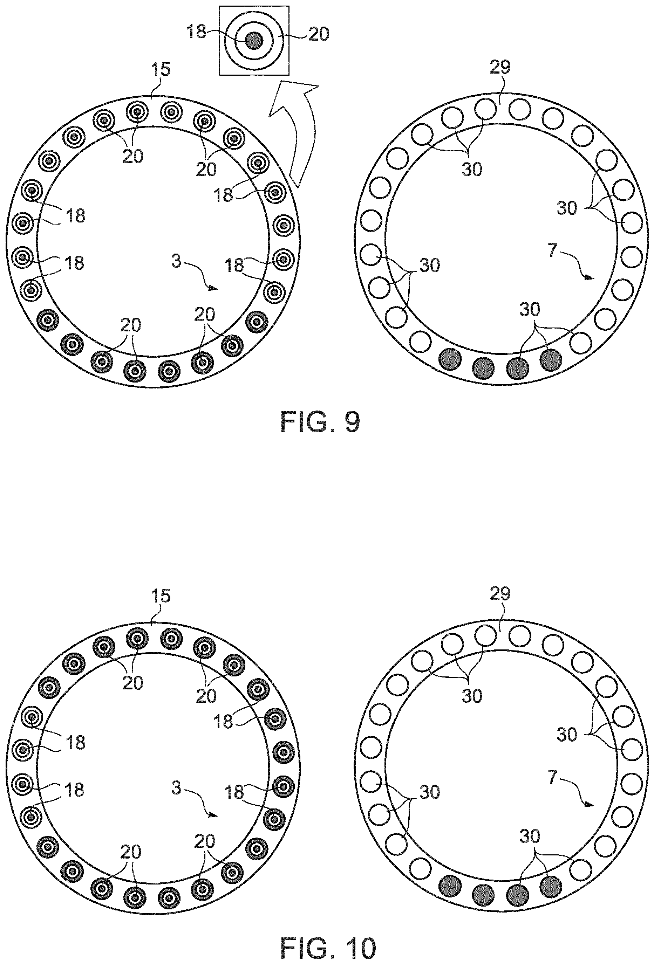

In the embodiment described, moreover, the main valves 27 are independently controllable by the controller 10, as well as the shut-off valves 37. Thus, a composition of the first group, i.e. the individual first burner assemblies 17 forming the first group, is not rigidly fixed and may be selected in accordance with circumstances and vary from a first partial load operating condition to a second partial load operating condition. Likewise, the active second burner assemblies 30 may be selected by the controller 10. For example (figures 8 and 9), four second burner assemblies 30 on one side, e.g. the lower side, of the second-stage combustor 7 are activated. At the same time, the main valves 27 may be controlled so that the same or a larger number of the first burner assemblies 17, e.g. eight, on the same (lower) side of the first-stage combustor assembly 3 receive the second value of the first main fuel flowrates FM1 (second group); and all the other first burner assemblies 17 (first group) receive the first value of the first main fuel flowrates FM1 (figure 8) or zero flowrate (figure 9) . The above configuration, with most of the first burner assemblies 17 controlled or shut-off, has a beneficial effect on gas turbine engine turndown.

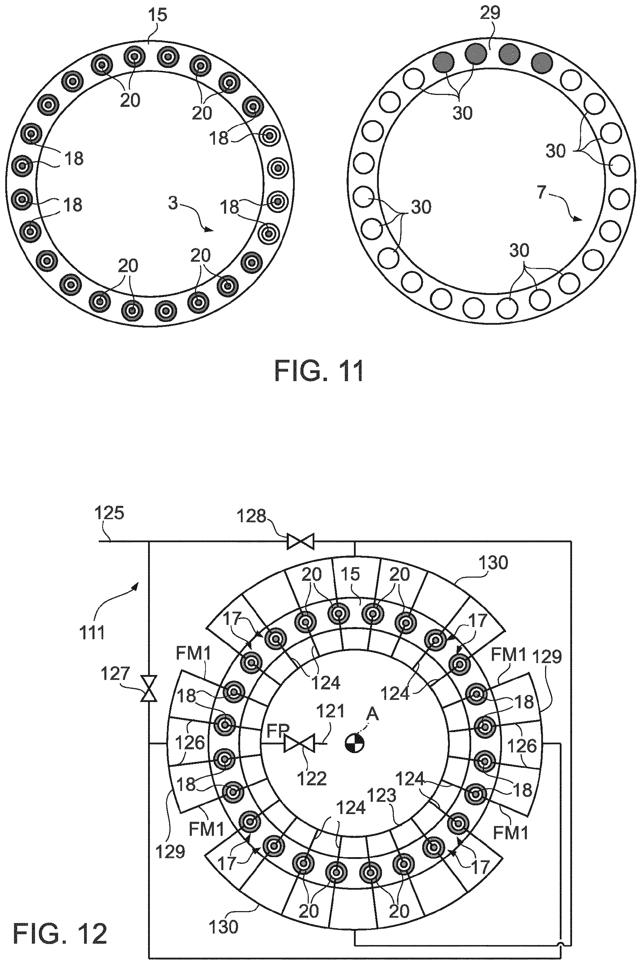

In another example, the first group of first burner assemblies 17 defines an alternating pattern, as illustrated in figures 10 and 11. In this case, the alternating pattern may include a first configuration, e.g. with four first burner assemblies 17 on one side of the first-stage supply system 11 receiving the first main fuel flowrates FM1 (figure 10); and a second configuration, e.g. with four first burner assemblies 17 on the opposite side of the first-stage combustor 3 receiving the first main fuel flowrates FM1 (figure 11).

The second burner assemblies 30 of the second-stage combustor 7 may be activated and deactivated in accordance with an alternating pattern as well. For example, the alternating pattern may include a first configuration, e.g. with only four lower second burner assemblies 30 activated (figure 10); and a second configuration, e.g. with only four upper second burner assemblies 17 activated (figure 11).

In one embodiment (not shown), all the second burner assemblies 30 may be deactivated before starting fuel reduction to the main burners 20 of the of first burner assemblies 17, i.e. the first group of second burner assemblies 30 is void.

In accordance with another embodiment, illustrated in figure 12 together with the annular combustion chamber 15 of the first-stage combustor 3, the first supply system, here indicated by 111, comprises a pilot branch and a main branch. The pilot branch comprises a pilot supply line 121, a pilot valve 122 and a pilot plenum 123. The pilot valve 122 is controlled by the controller 10 and has an inlet coupled to the pilot supply line 121 and an outlet coupled to each one of the pilot burners 18 of the first burner assemblies 17 through the pilot plenum 123 and the ducts 124.

The main branch of the first-stage supply system 111 comprises a main supply line 125, a first main valve 127, a second main valve 128, a first main plenum 129 and a second main plenum 130. The first main valve 127, controlled by the controller 10, has an inlet coupled to the main supply line 125 and an outlet coupled to the first main plenum 129, which is in turn coupled to the main burners 20 of a first group of first burner assemblies 17 through ducts 126. The second main valve 128, controlled by the controller 10, has an inlet coupled to the main supply line 125 and an outlet coupled to the second main plenum 130, which is in turn coupled to the main burners 20 of a second group of first burner assemblies 17, complementary to the first group. Each of the first group and the second group includes two sets of adjacent first burner assemblies 17 arranged opposite with respect to the longitudinal axis A.

Once the first group of second burner assemblies 30 have been deactivated, the controller operates the first main valve 127 to supply the first value of the first main fuel flowrates FM1, lower than a full-load flowrate value and lower than the second value of the first main fuel flowrates FM1, to the main burners 20 of the first group of first burner assemblies 17. The main burners 20 of the second group of first burner assemblies 17 continuously receive the second value of the first main fuel flowrates FM1. Load reduction to very low level can be thus achieved without affecting frequency response and emission compliance.

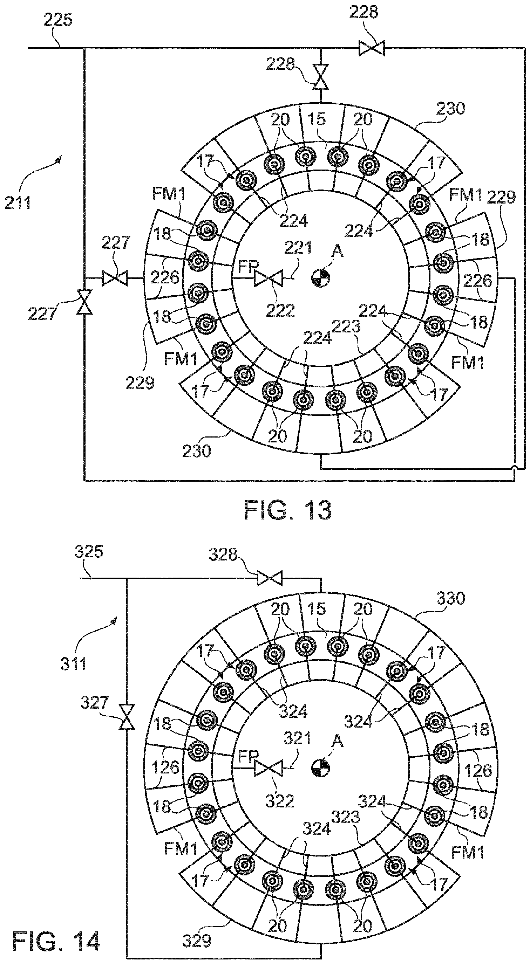

In another embodiment, illustrated in figure 13, the main branch of the first-stage supply system, here indicated by 211, is configured to implement static pattern control in figures 10 and 11 or alternating pattern control as in figures 8 and 9 and, in addition, alternating pattern of upper and lower first burner assemblies 17. The first-stage supply system 211 comprises a main supply line 225, two first main valves 227, two second main valves 228, two first main plena 229 and two second main plena 230. Each first main plenum 229 feeds the first burner assemblies 17 of a respective one of the configurations of figures 8 and 9, e.g. on a respective side of the first-stage combustor 3. The first main valves 227 are independently controlled by the controller 10 and connect the main supply line 225 each to a respective one of the first main plena 229. Likewise, the two second main plena 230 feed the first burner assemblies 17 respectively in the upper portion and in the lower portion of the first-stage combustor 3. The second main valves 228 are independently controlled by the controller 10 and connect the main supply line 225 each to a respective one of the sec main plena 230. Figure 13 also shows a pilot supply line 221, a pilot valve 222, a pilot plenum 223 and ducts 224.

It is therefore possible to drive the first-stage combustor 3 in accordance with a four-fold alternating pattern, in which the first main fuel flowrates FM1 is sequentially supplied to the first burner assemblies 17 in the set on one side, on the opposite side, in the upper portion and in the lower portion of the first-stage combustor 3.

In an embodiment illustrated in figure 14, the main branch of the first-stage supply system 311 comprises a main supply line 325, a first main valve 327, a second main valve 328, a first main plenum 329 and a second main plenum 330. The first main valve 327, controlled by the controller 10, has an inlet coupled to the main supply line 325 and an outlet coupled to the first main plenum 329, which is in turn coupled to the main burners 20 of the first group of first burner assemblies 17 through ducts 326. The first group includes eight first burner assemblies 17 on the lower side of the first-stage combustor 3. The second main valve 328, controlled by the controller 10, has an inlet coupled to the main supply line 325 and an outlet coupled to the second main plenum 330, which is in turn coupled to the main burners 20 of a second group of first burner assemblies 17, complementary to the first group. Figure 14 also shows a pilot supply line 321, a pilot valve 322, a pilot plenum 323 and ducts 324. The embodiment of figure 14 implements the pattern of figures 8 and 9 in a structurally simple, yet effective manner.

Finally, it is evident that the described gas turbine engine and method of controlling a gas turbine engine may be subject to modifications and variations, without departing from the scope of the present invention, as defined in the appended claims.

In particular, the number and distribution of the first burner assemblies forming the first group may be selected in accordance with design preferences or, in case the first burner assemblies can be individually controlled, even in accordance to circumstances. For example, the number of first burner assemblies of the first group may be varied based on the current load request.

Also, any static or variable pattern of first burner assemblies 17 receiving the first main fuel flowrates may be selected in accordance with design preferences, including a rotating pattern.

## Claims

1. A gas turbine engine, comprising:
a first-stage combustor (3) with a plurality of first burner assemblies (17);
a second-stage combustor (7) with a plurality of second burner assemblies (30), downstream of the first-stage combustor (3);
a fuel supply system (9), configured to supply a respective first fuel flowrate (FM1) to each first burner assembly (17) and a respective second fuel flowrate (FM2) to each second burner assembly (30);
a controller (10), configured to control the first fuel flowrate (FM1) and the second fuel flowrate (FM2);
wherein the controller (10) is further configured to selectively activate and deactivate the second burner assemblies (30);
**characterized in that** the controller (10) is further configured to supply a first value of the first fuel flowrate (FM1) to a first group of the first burner assemblies (17) and a second value of the first fuel flowrate (FM1) to a second group of the first burner assemblies (17) in partial load operating condition while at least a first group of the second burner assemblies (30) are inactive, the first value of the first fuel flowrate (FM1) being lower than the second value of the first fuel flowrate (FM1) or being zero flowrate.

2. The gas turbine engine according to claim 1, wherein the controller (10) is further configured to supply the first group of the first burner assemblies (17) with the partial value of the first fuel flowrate (FM1) while a second group of the second burner assemblies (30) are active.

3. The gas turbine engine according to claim 1, wherein the controller (10) is further configured to supply the first group of the first burner assemblies (17) with the partial value of the first fuel flowrate (FM1) while all the second burner assemblies (30) are inactive.

4. The gas turbine engine according to any one of the preceding claims, wherein a composition of the first group of the first burner assemblies (17) varies from a first partial load operating condition to a second partial load operating condition.

5. The gas turbine engine according to any one of the preceding claims, wherein each of the first burner assemblies (17) comprise a respective main burner (20) and a respective pilot burner (17) and wherein the fuel supply system (9) is configured to supply the main burners (20) with the respective first fuel flowrate (FM1) and the pilot burner (17) with a pilot fuel flowrate.

6. The gas turbine engine according to claim 5, wherein the fuel supply system (9) comprises a first-stage supply system (11; 111; 211; 311), coupled to the first-stage combustor (3) and controlled by the controller (10) to supply the first fuel flowrates (FM1) to the first burner assemblies (17), and a second-stage supply system (12), coupled to the second-stage combustor (7) and controlled by the controller (10) to supply the second fuel flowrates (FM2) to the second combustor assemblies (30).

7. The gas turbine engine according to claim 6, wherein the first-stage supply system (11) comprises a main supply line (25), coupled to the main burners (20) of the first group of first burner assemblies (17), and a plurality of first main valves (27), independently controlled by the controller (10) and each having an inlet coupled to the first main supply line (25) and an outlet coupled to a respective one of the main burners (20) of the first group of first burner assemblies (17).

8. The gas turbine engine according to claim 6, wherein the first-stage supply system (111; 211; 311) comprises a main supply line (121; 221; 321), coupled to the main burners (20) of the first group of first burner assemblies (17), at least a first main valve (127; 227; 327), controlled by the controller (10) and having an inlet coupled to the first main supply line (121; 221; 321) and an outlet coupled to the main burners (20) of the first group of first burner assemblies (17), and at least a second main valve (128; 228), controlled by the controller (10) and having an inlet coupled to the first main supply line (121; 221; 321) and an outlet coupled to the main burners (20) of the second group of first burner assemblies (17), the second group of first burner assemblies (17) being complementary to the first group of first burner assemblies (17).

9. The gas turbine engine according to any one of claims 6 to 8, wherein the first-stage supply system (11; 111; 211; 311) comprises a pilot supply line (21; 121; 221; 321) configured to supply a pilot fuel flowrate (FP) to the pilot burners (17) of the first burner assemblies (17) and a pilot valve (22; 122; 222; 322), controlled by the controller (10) and having an inlet coupled to the pilot supply line (21; 121; 221; 321) and an outlet coupled to the pilot burners (17) of first burner assemblies (17); and wherein the controller (10) is configured to maintain the pilot fuel flowrate (FP) while the partial value of the first fuel flowrate (FM1) is supplied to the first group of the first burner assemblies (17).

10. The gas turbine engine according to any one of claims 5 to 9, wherein the controller (10) is further configured to simultaneously or sequentially switch off the main burners (20) of the first group of first burner assemblies (17) in the partial load operating condition.

11. The gas turbine engine according to any one of the preceding claims, wherein the first-stage combustor (3) comprises a first annular combustion chamber (15) and the second-stage combustor (7) comprises a second annular combustion chamber (29) and wherein the first burner assemblies (17) and the second burner assemblies (30) are circumferentially arranged about an axis (A).

12. A method of controlling a gas turbine engine comprising a first-stage combustor (3) with a plurality of first burner assemblies (17) and a second-stage combustor (7) with a plurality of second burner assemblies (30), downstream of the first-stage combustor (3);
the method comprising:
supplying a respective first fuel flowrate (FM1) to each first burner assembly (17) and a respective second fuel flowrate (FM2) to each second burner assembly (30); and
selectively activating and deactivating the second burner assemblies (30);
**characterized by** supplying a first value of the first fuel flowrate (FM1) to a first group of the first burner assemblies (17) and a second value of the first fuel flowrate (FM1) to a second group of the first burner assemblies (17) in a first load operating condition while at least a first group of the second burner assemblies (30) are inactive, the partial value of the first fuel flowrate (FM1) being lower than the second value of the first fuel flowrate (FM1) or being zero flowrate.

13. The method according to claim 12, comprising supplying the first group of the first burner assemblies (17) with the partial value of the first fuel flowrate (FM1) while a second group of the second burner assemblies (30) are active.

14. The method according to claim 12, comprising supplying the first group of the first burner assemblies (17) with the partial value of the first fuel flowrate (FM1) while all the second burner assemblies (30) are inactive.

15. The method according to any one of claims 12 or 14, comprising:
from a base-load operating condition, in which all the second burner assemblies (30) are active, deactivating the group of the second burner assemblies (30) until a load threshold is reached; and
performing the supplying the partial value of the first fuel flowrate (FM1) to at least the first group of the first burner assemblies (17) after the load threshold has been reached.

## Patentansprüche

1. Gasturbinenmaschine, umfassend:
einen Erststufen-Brenner (3) mit mehreren ersten Brenneranordnungen (17);
einen Zweitstufen-Brenner (7) mit mehreren zweiten Brenneranordnungen (30), stromabwärts des Erststufen-Brenners (3);
ein Brennstoffzuführungssystem (9), das dazu konfiguriert ist, einen jeweiligen ersten Brennstoffdurchsatz (FM1) zu jeder ersten Brenneranordnung (17) und einen jeweiligen zweiten Brennstoffdurchsatz (FM2) zu jeder zweiten Brenneranordnung (30) zuzuführen;
eine Steuer-/Regeleinrichtung (10), die dazu konfiguriert ist, den ersten Brennstoffdurchsatz (FM1) und den zweiten Brennstoffdurchsatz (FM2) zu steuern/regeln;
wobei die Steuer-/Regeleinrichtung (10) ferner dazu konfiguriert ist, die zweiten Brenneranordnungen (30) selektiv zu aktivieren und zu deaktivieren;
**dadurch gekennzeichnet, dass** die Steuer-/Regeleinrichtung (10) ferner dazu konfiguriert ist,
einen ersten Wert des ersten Brennstoffdurchsatzes (FM1) zu einer ersten Gruppe der ersten Brenneranordnungen (17) und einen zweiten Wert des ersten Brennstoffdurchsatzes (FM1) zu einer zweiten Gruppe der ersten Brenneranordnungen (17) im Teillast-Betriebszustand zuzuführen, während wenigstens eine erste Gruppe der zweiten Brenneranordnungen (30) inaktiv ist, wobei der erste Wert des ersten Brennstoffdurchsatzes (FM1) niedriger ist als der zweite Wert des ersten Brennstoffdurchsatzes (FM1) oder gleich dem Null-Durchsatz ist.

2. Gasturbinenmaschine nach Anspruch 1, wobei die Steuer-/Regeleinrichtung (10) dazu konfiguriert ist, der ersten Gruppe der ersten Brenneranordnungen (17) den Teilwert des ersten Brennstoffdurchsatzes (FM1) zuzuführen, während eine zweite Gruppe der zweiten Brenneranordnungen (30) aktiv ist.

3. Gasturbinenmaschine nach Anspruch 1, wobei die Steuer-/Regeleinrichtung (10) ferner dazu konfiguriert ist, der ersten Gruppe der ersten Brenneranordnungen (17) den Teilwert des ersten Brennstoffdurchsatzes (FM1) zuzuführen, während alle zweiten Brenneranordnungen (30) inaktiv sind.

4. Gasturbinenmaschine nach einem der vorangehenden Ansprüche, wobei eine Zusammensetzung der ersten Gruppe der ersten Brenneranordnungen (17) von einem ersten Teillast-Betriebszustand zu einem zweiten Teillast-Betriebszustand variiert.

5. Gasturbinenmaschine nach einem der vorangehenden Ansprüche, wobei jede der ersten Brenneranordnungen (17) einen jeweiligen Hauptbrenner (20) und einen jeweiligen Pilotbrenner (17) umfasst, und wobei das Brennstoffzuführungssystem (9) dazu konfiguriert ist, den Hauptbrennern (20) den jeweiligen ersten Brennstoffdurchsatz (FM1) und den Pilotbrenner (17) einen Pilot-Brennstoffdurchsatz zuzuführen.

6. Gasturbinenmaschine nach Anspruch 5, wobei das Brennstoffzuführungssystem (9) ein Erststufen-Zuführungssystem (11; 111; 211; 311) umfasst, das mit dem Erststufen-Brenner (3) gekoppelt ist und durch die Steuer-/Regeleinrichtung (10) gesteuert wird, um die ersten Brennstoffdurchsätze (FM1) den ersten Brenneranordnungen (17) zuzuführen, sowie ein Zweitstufen-Zuführungssystem (12), das mit dem Zweitstufen-Brenner (7) gekoppelt ist und durch die Steuer-/Regeleinrichtung (10) gesteuert wird, um die zweiten Brennstoffdurchsätze (FM2) den zweiten Brenneranordnungen (30) zuzuführen.

7. Gasturbinenanordnung nach Anspruch 6, wobei das Erststufen-Zuführungssystem (11) eine Hauptzuführungsleitung (25) umfasst, die mit den Hauptbrennern (20) der ersten Gruppe der ersten Brenneranordnungen (17) gekoppelt ist, sowie mehrere erste Hauptventile (27), die durch die Steuer-/Regeleinrichtung (10) unabhängig gesteuert werden und jeweils einen mit der ersten Hauptzuführungsleitung (25) gekoppelt Einlass und einen mit einem entsprechenden Hauptbrenner (20) der ersten Gruppe der ersten Brenneranordnungen (17) gekoppelten Auslass aufweisen.

8. Gasturbinenmaschine nach Anspruch 6, wobei das Erststufen-Zuführungssystem (111; 211; 311) eine Hauptzuführungsleitung (121; 221; 321) umfasst, die mit den Hauptbrennern (20) der ersten Gruppe der ersten Brenneranordnungen (17) gekoppelt ist, wenigstens ein erstes Hauptventil (127; 227; 327), das durch die Steuer-/Regeleinrichtung (10) gesteuert wird und einen mit der ersten Hauptzuleitung (121; 221; 321) gekoppelten Einlass und einen mit den Hauptbrennern (20) der ersten Gruppe der ersten Brenneranordnungen (17) gekoppelten Ausgang aufweist, und wenigstens ein zweites Hauptventil (128; 228), das durch die Steuer-/Regeleinrichtung (10) gesteuert wird und einen mit der ersten Hauptzuführungsleitung (121; 221; 321) gekoppelten Eingang und einen mit den Hauptbrennern (20) der zweiten Gruppe der ersten Brenneranordnungen (17) gekoppelten Ausgang aufweist, wobei die zweite Gruppe der ersten Brenneranordnungen (17) komplementär zu der ersten Gruppe der ersten Brenneranordnungen (17) ist.

9. Gasturbinenmaschine nach einem der Ansprüche 6 bis 8, wobei das Erststufen-Zuführungssystem (11; 111; 211; 311) eine Pilot-Zuführungsleitung (21; 121; 221; 321) umfasst, die dazu konfiguriert ist, den Pilotbrennern (17) der ersten Brenneranordnungen (17) einen Pilot-Brennstoffdurchsatz (FP) zuzuführen, und ein Pilotventil (22; 122; 222; 322), das durch die Steuer-/Regeleinrichtung (10) gesteuert wird und einen mit der Pilot-Zuführungsleitung (21; 121; 221; 321) gekoppelten Einlass und einen mit den Pilotbrennern (17) der ersten Brenneranordnungen (17) gekoppelten Auslass aufweist; und wobei die Steuer-/Regeleinrichtung (10) dazu konfiguriert ist, den Pilot-Brennstoffdurchsatz (FP) aufrechtzuerhalten, während der Teilwert des ersten Brennstoffdurchsatzes (FM1) der ersten Gruppe der ersten Brenneranordnungen (17) zugeführt wird.

10. Gasturbinenmaschine nach einem der Ansprüche 5 bis 9, wobei die Steuer-/Regeleinrichtung (10) ferner dazu konfiguriert ist, die Hauptbrenner (20) der ersten Gruppe der ersten Brenneranordnungen (17) im Teillast-Betriebszustand gleichzeitig oder sequentiell abzuschalten.

11. Gasturbinenmaschine nach einem der vorangehenden Ansprüche, wobei der Erststufen-Brenner (3) eine erste ringförmige Brennkammer (15) umfasst und der Zweitstufen-Brenner (7) eine zweite ringförmige Brennkammer (29) umfasst, und wobei die ersten Brenneranordnungen (17) und die zweiten Brenneranordnungen (30) in Umfangsrichtung um eine Achse (A) angeordnet sind.

12. Verfahren zum Steuern/Regeln einer Gasturbinenmaschine, die einen Erststufen-Brenner (3) mit mehreren ersten Brenneranordnungen (17) und einen Zweitstufen-Brenner (7) mit mehreren zweiten Brenneranordnungen (30), stromabwärts des Erststufen-Brenners (3), umfasst;
wobei das Verfahren umfasst:
Zuführen eines jeweiligen ersten Brennstoffdurchsatzes (FM1) zu jeder ersten Brenneranordnung (17) und eines jeweiligen zweiten Brennstoffdurchsatzes (FM2) zu jeder zweiten Brenneranordnung (30); und
selektives Aktivieren und Deaktivieren der zweiten Brenneranordnungen (30);
**gekennzeichnet durch** ein Zuführen eines ersten Wertes des ersten Brennstoffdurchsatzes (FM1) zu einer ersten Gruppe der ersten Brenneranordnungen (17) und eines zweiten Wertes des ersten Brennstoffdurchsatzes (FM1) zu einer zweiten Gruppe der ersten Brenneranordnungen (17) in einem ersten Lastbetriebszustand, während wenigstens eine erste Gruppe der zweiten Brenneranordnungen (30) inaktiv ist, wobei der Teilwert des ersten Brennstoffdurchsatzes (FM1) niedriger ist als der zweite Wert des ersten Brennstoffdurchsatzes (FM1) oder gleich dem Null-Durchsatz ist.

13. Verfahren nach Anspruch 12, umfassend ein Zuführen des Teilwerts des ersten Brennstoffdurchsatzes (FM1) zu der ersten Gruppe der ersten Brenneranordnungen (17), während eine zweite Gruppe der zweiten Brenneranordnungen (30) aktiv ist.

14. Verfahren nach Anspruch 12, umfassend ein Zuführen des Teilwerts des ersten Brennstoffdurchsatzes (FM1) zu der ersten Gruppe der ersten Brenneranordnungen (17), während alle zweiten Brenneranordnungen (30) inaktiv sind.

15. Verfahren nach einem der Ansprüche 12 oder 14, umfassend:
ausgehend von einem Grundlast-Betriebszustand, in dem alle zweiten Brenneranordnungen (30) aktiv sind, Deaktivieren der Gruppe der zweiten Brenneranordnungen (30), bis eine Lastschwelle erreicht ist; und
Durchführen des Zuführens des Teilwertes des ersten Brennstoffdurchsatzes (FM1) zu wenigstens der ersten Gruppe der ersten Brenneranordnungen (17), nachdem die Lastschwelle erreicht worden ist.

## Revendications

1. Moteur de turbine à gaz, comprenant :
une chambre de combustion de premier étage (3) avec une pluralité de premiers ensembles de brûleurs (17) ;
une chambre de combustion de second étage (7) avec une pluralité de seconds ensembles de brûleurs (30), en aval de la chambre de combustion de premier étage (3) ;
un système de fourniture de carburant (9), configuré pour fournir un premier débit d'écoulement de carburant respectif (FM1) à chaque premier ensemble de brûleurs (17) et un second débit d'écoulement de carburant respectif (FM2) à chaque second ensemble de brûleurs (30) ;
un dispositif de commande (10), configuré pour commander le premier débit d'écoulement de carburant (FM1) et le second débit d'écoulement de carburant (FM2) ;
dans lequel le dispositif de commande (10) est en outre configuré pour activer et désactiver sélectivement les seconds ensembles de brûleurs (30) ;
**caractérisé en ce que** le dispositif de commande (10) est en outre configuré pour fournir une première valeur du premier débit d'écoulement de carburant (FM1) à un premier groupe des premiers ensembles de brûleurs (17) et une seconde valeur du premier débit d'écoulement de carburant (FM1) à un second groupe des premiers ensembles de brûleurs (17) dans une condition de fonctionnement à charge partielle alors qu'au moins un premier groupe des seconds ensembles de brûleurs (30) sont inactifs, la première valeur du premier débit d'écoulement de carburant (FM1) étant inférieure à la seconde valeur du premier débit d'écoulement de carburant (FM1) ou étant un débit d'écoulement nul.

2. Moteur de turbine à gaz selon la revendication 1, dans lequel le dispositif de commande (10) est en outre configuré pour fournir au premier groupe des premiers ensembles de brûleurs (17) la valeur partielle du premier débit d'écoulement de carburant (FM1) alors qu'un second groupe des seconds ensembles de brûleurs (30) est actif.

3. Moteur de turbine à gaz selon la revendication 1, dans lequel le dispositif de commande (10) est en outre configuré pour fournir au premier groupe des premiers ensembles de brûleurs (17) la valeur partielle du premier débit d'écoulement de carburant (FM1) alors que tous les seconds ensembles de brûleurs (30) sont inactifs.

4. Moteur de turbine à gaz selon l'une quelconque des revendications précédentes, dans lequel une composition du premier groupe des premiers ensembles de brûleurs (17) varie d'une première condition de fonctionnement à charge partielle à une seconde condition de fonctionnement à charge partielle.

5. Moteur de turbine à gaz selon l'une quelconque des revendications précédentes, dans lequel chacun des premiers ensembles de brûleurs (17) comprend un brûleur principal respectif (20) et un brûleur pilote respectif (17) et dans lequel le système de fourniture de carburant (9) est configuré pour fournir aux brûleurs principaux (20) le premier débit d'écoulement de carburant respectif (FM1) et au brûleur pilote (17) un débit d'écoulement de carburant pilote.

6. Moteur de turbine à gaz selon la revendication 5, dans lequel le système de fourniture de carburant (9) comprend un système de fourniture de premier étage (11 ; 111 ; 211 ; 311), couplé à la chambre de combustion de premier étage (3) et commandé par le dispositif de commande (10), pour fournir les premiers débits d'écoulement de carburant (FM1) aux premiers ensembles de brûleurs (17), et un système de fourniture de second étage (12), couplé à la chambre de combustion de second étage (7) et commandé par le dispositif de commande (10), pour fournir les seconds débits d'écoulement de carburant (FM2) aux seconds ensembles de chambre de combustion (30).

7. Moteur de turbine à gaz selon la revendication 6, dans lequel le système de fourniture de premier étage (11) comprend une ligne de fourniture principale (25), couplée aux brûleurs principaux (20) du premier groupe de premiers ensembles de brûleurs (17), et une pluralité de premières vannes principales (27), commandées indépendamment par le dispositif de commande (10) et présentant chacune une entrée couplée à la première ligne de fourniture principale (25) et une sortie couplée à l'un respectif des brûleurs principaux (20) du premier groupe de premiers ensembles de brûleurs (17).

8. Moteur de turbine à gaz selon la revendication 6, dans lequel le système de fourniture de premier étage (111 ; 211 ; 311) comprend une ligne de fourniture principale (121 ; 221 ; 321), couplée aux brûleurs principaux (20) du premier groupe de premiers ensembles de brûleurs (17), au moins une première vanne principale (127 ; 227 ; 327), commandée par le dispositif de commande (10) et présentant une entrée couplée à la première ligne de fourniture principale (121 ; 221 ; 321) et une sortie couplée aux brûleurs principaux (20) du premier groupe de premiers ensembles de brûleurs (17), et au moins une seconde vanne principale (128 ; 228), commandée par le dispositif de commande (10) et présentant une entrée couplée à la première ligne de fourniture principale (121 ; 221 ; 321) et une sortie couplée aux brûleurs principaux (20) du second groupe de premiers ensembles de brûleurs (17), le second groupe de premiers ensembles de brûleurs (17) étant complémentaire du premier groupe de premiers ensembles de brûleurs (17).

9. Moteur de turbine à gaz selon l'une quelconque des revendications 6 à 8, dans lequel le système de fourniture de premier étage (11 ; 111 ; 211 ; 311) comprend une ligne de fourniture pilote (21 ; 121 ; 221 ; 321) configurée pour fournir un débit d'écoulement de carburant pilote (FP) aux brûleurs pilotes (17) des premiers ensembles de brûleurs (17) et une vanne pilote (22 ; 122 ; 222 ; 322), commandée par le dispositif de commande (10) et présentant une entrée couplée à la ligne de fourniture pilote (21 ; 121 ; 221 ; 321) et une sortie couplée aux brûleurs pilotes (17) des premiers ensembles de brûleurs (17) ; et dans lequel le dispositif de commande (10) est configuré pour maintenir le débit d'écoulement de carburant pilote (FP) tandis que la valeur partielle du premier débit d'écoulement de carburant (FM1) est fournie au premier groupe des premiers ensembles de brûleurs (17).

10. Moteur de turbine à gaz selon l'une quelconque des revendications 5 à 9, dans lequel le dispositif de commande (10) est en outre configuré pour éteindre simultanément ou séquentiellement les brûleurs principaux (20) du premier groupe de premiers ensembles de brûleurs (17) dans la condition de fonctionnement à charge partielle.

11. Moteur de turbine à gaz selon l'une quelconque des revendications précédentes, dans lequel la chambre de combustion de premier étage (3) comprend une première chambre de combustion annulaire (15) et la chambre de combustion de second étage (7) comprend une seconde chambre de combustion annulaire (29) et dans lequel les premiers ensembles de brûleurs (17) et les seconds ensembles de brûleurs (30) sont agencés circonférentiellement autour d'un axe (A).

12. Procédé de commande d'un moteur de turbine à gaz comprenant une chambre de combustion de premier étage (3) avec une pluralité de premiers ensembles de brûleurs (17) et une chambre de combustion de second étage (7) avec une pluralité de seconds ensembles de brûleurs (30), en aval de la chambre de combustion de premier étage (3) ;
le procédé comprenant les étapes consistant à :
fournir un premier débit d'écoulement de carburant respectif (FM1) à chaque premier ensemble de brûleurs (17) et un second débit d'écoulement de carburant respectif (FM2) à chaque second ensemble de brûleurs (30) ; et
activer et désactiver sélectivement les seconds ensembles de brûleurs (30) ;
**caractérisé par** la fourniture d'une première valeur du premier débit d'écoulement de carburant (FM1) à un premier groupe des premiers ensembles de brûleurs (17) et d'une seconde valeur du premier débit d'écoulement de carburant (FM1) à un second groupe des premiers ensembles de brûleurs (17) dans une première condition de fonctionnement sous charge alors qu'au moins un premier groupe des seconds ensembles de brûleurs (30) sont inactifs, la valeur partielle du premier débit d'écoulement de carburant (FM1) étant inférieure à la seconde valeur du premier débit d'écoulement de carburant (FM1) ou étant un débit d'écoulement nul.

13. Procédé selon la revendication 12, comprenant la fourniture au premier groupe des premiers ensembles de brûleurs (17) de la valeur partielle du premier débit d'écoulement de carburant (FM1) alors qu'un second groupe des seconds ensembles de brûleurs (30) sont actifs.

14. Procédé selon la revendication 12, comprenant la fourniture au premier groupe des premiers ensembles de brûleurs (17) de la valeur partielle du premier débit d'écoulement de carburant (FM1) alors que tous les seconds ensembles de brûleurs (30) sont inactifs.

15. Procédé selon l'une quelconque des revendications 12 ou 14, comprenant les étapes consistant à :
à partir d'une condition de fonctionnement à charge de base, dans laquelle tous les seconds ensembles de brûleurs (30) sont actifs, désactiver le groupe des seconds ensembles de brûleurs (30) jusqu'à ce qu'un seuil de charge soit atteint ; et
effectuer la fourniture de la valeur partielle du premier débit d'écoulement de carburant (FM1) à au moins le premier groupe des premiers ensembles de brûleurs (17) après que le seuil de charge a été atteint.
